# EUROPÄISCHE PATENTSCHRIFT

(11) **EP 1 792 765 B1**
(45) Veröffentlichungstag und Bekanntmachung des Hinweises auf die Patenterteilung: **10.02.2010**
(21) Anmeldenummer: 06024169.2
(22) Anmeldetag: 22.11.2006
(51) Int. Cl.: B60J 7/20

(54) **Fahrzeug mit Abdeckanordnung**
Vehicle with cover arrangement
Véhicule pourvu d'un couvercle

(30) Priorität: 01.12.2005 DE 102005057651
(43) Veröffentlichungstag der Anmeldung: 06.06.2007
(73) Patentinhaber: Magna Car Top Systems GmbH, 74321 Bietigheim-Bissingen (DE)
(72) Erfinder: Roeder, Holger, 73054 Eislingen (DE); Neuberger, Michael, 74613 Öhringen (DE)

(56) Entgegenhaltungen:
- EP-A- 1 197 368
- DE-A1- 19 712 967
- DE-C1- 10 220 770

## Beschreibung

Die Erfindung betrifft ein Fahrzeug mit einem in einem Verstauraum versenkbaren Fahrzeugdach gemäß dem Oberbegriff des Anspruchs 1.

Aus der DE 197 12 967 A1 ist eine aus drei Teilen bestehende Abdeckanordnung für einen Verstauraum eines versenkbaren Fahrzeugdachs bekannt. Die bekannte Abdeckanordnung besteht aus einem Mittelteil und daran in Abdeckposition seitlich anschließenden Abdeckteilen. Die Abdeckteile sind über Drehschiebegelenke unmittelbar an dem Mittelteil befestigt. Über die Drehschiebegelenke können die Abdeckteile zwischen der seitlichen Abdeckposition in eine Verstauposition unterhalb des Mittelteils verschwenkt werden. Während der Verstellbewegung führen die Abdeckteile eine genau definierte Bewegung aus. Dabei ist der werkseitige Justageaufwand der Abdeckteile und/oder der Drehschiebergelenke groß, um die Abdeckteile unter Berücksichtigung sämtlicher Toleranzen in die exakte Abdeckposition verschwenken zu können.

Aus der EP 1 197 368 B1 ist ebenfalls ein Fahrzeug mit einem in einem Verstauraum versenkbaren Fahrzeugdach bekannt. Für den Verstauraum ist eine dreiteilige Abdeckanordnung bestehend aus Mittelteil und in Abdeckposition seitlich des Mittelteils angeordneten Abdeckteilen vorgesehen. Die Abdeckteile sind über jeweils einen Schwenkarm gelenkig mit dem Mittelteil verbunden. Über die Schwenkarme können die Abdeckteile zwischen der seitlichen Abdeckposition und einer unterhalb des Mittelteils befindlichen Verstauposition verschwenkt werden. Um den Höhenversatz zwischen Verstauposition und Abdeckposition zu überwinden, sind die Abdeckteile relativ zu ihren Schwenkarmen nach oben verschwenkbar. Auch bei diesem Fahrzeug ist der Justageaufwand bei der Montage der Abdeckungen an ihren Schwenkarmen groß, um den Verstauraum unter Berücksichtigung sämtlicher Fertigungstoleranzen exakt und bündig mit den benachbarten Karosserieteilen abdecken zu können.

Aus der DE 102 20 770 C1 ist ein Cabriolet-Fahrzeug mit einem in einem Ablageraum zu verstauenden Fahrzeugdach bekannt, wobei der Ablageraum Teil des Kofferraumes ist und von einem Kofferraumdeckel zu verschließen ist. Der Kofferraumdeckel ist an einem Tragrahmen gehalten, an dem über Schwenkarme seitlich angeordnete Abdeckteile schwenkbar gelagert sind, die zwischen einer unter dem Kofferraumdeckel eingeklappten Lage in eine gegenüber dem Kofferraumdeckel aufgeklappte Lage verschwenkbar sind. Gemäß einer in der DE 102 20 770 C2 genannten Variante ist die Abdeckklappe über eine begrenzt bewegliche Gelenkverbindung mit dem Verschwenkarm gekoppelt, beispielsweise über ein elastisches Gelenk, wodurch auch toleranzbedingte Abweichungen in der konstruktiv vorgegebenen Anschlusslage gegenüber dem Kofferraumdeckel auszugleichen sind.

Der Erfindung liegt die Aufgabe zugrunde, ein Fahrzeug mit einer Abdeckanordnung vorzuschlagen, die eine exakte Abdeckung des Verstauraums bei minimalem Justageaufwand gewährleistet.

Diese Aufgabe wird mit den Merkmalen des Anspruchs 1 gelöst. Vorteilhafte Weiterbildungen der Erfindung sind in den Unteransprüchen angegeben.

Der Erfindung liegt der Gedanke zugrunde, das Abdeckteil schwimmend an seinem zugehörigen Schwenkarm zu lagern, so dass es entlang sämtlicher drei Raumachsen relativ zu dem Schwenkarm frei verstellbar ist. Läuft nun das Abdeckteil bei der Verstellbewegung von seiner Verstauposition in seine Abdeckposition auf ein Fahrzeugteil, insbesondere die Fahrzeugkarosserie auf, so wird das Abdeckteil bei weiterer Verstellung aufgrund der freien Beweglichkeit entlang der drei Raumachsen relativ zu dem Schwenkarm in seine exakte Abdeckposition verschoben. Durch die relative Verschieblichkeit des Abdeckteils können fertigungsbedingte Toleranzen, beispielsweise der Fahrzeugkarosserie, oder Toleranzen bei der Montage des Schwenkarms oder des Abdeckteils ausgeglichen werden. Mit Vorteil ist vorgesehen, dass die schwimmende Lagerung derart ausgebildet ist, dass eine Verstellung des Abdeckteils um etwa 5 mm in alle Richtungen von einem zentralen Punkt aus gesehen möglich ist. Hierdurch können Toleranzen von bis zu etwa +/- 5 mm ausgeglichen werden.

Die Abdeckteile dienen in einem Fahrzeug mit öffnungsfähigem Dach dazu, die in der geöffneten Dachposition sichtbar werdenden, normalerweise im Fahrzeuginneren angeordneten Komponenten abzudecken. Insbesondere bei Fahrzeugen mit absenkbaren C-Säulen können die Abdeckteile den von diesen in abgesenkter Stellung freigegebenen Bauraum abdecken.

Die X-Achse und die Y-Achse liegen in einer gedachten, von dem Abdeckteil aufgespannten Ebene. Bei einem gebogenen ausgebildeten Abdeckteil liegt diese Ebene in der mittleren Flächenausdehnung des Abdeckteils. Die Ebene ist in der Regel im Wesentlichen horizontal ausgerichtet, so dass näherungsweise davon ausgegangen werden kann, dass die X-Achse bei in Abdeckposition befindlichem Abdeckteil parallel zur Fahrzeuglängsachse und die Y-Achse in der Abdeckposition parallel zur Fahrzeugquerachse verläuft. Hieraus folgt, dass die Z-Achse senkrecht zu der gedachten Ebene angeordnet ist, also im Regelfall im Wesentlichen vertikal und parallel zur Fahrzeughochachse angeordnet ist. Die schwimmende Lagerung ist erfindungsgemäß derart ausgestaltet, dass das Abdeckteil nicht nacheinander entlang der X-Achse, der Y-Achse und der Z-Achse verstellbar ist, sondern dass das Abdeckteil frei im Raum, also gleichzeitig entlang der X-Achse, der Y-Achse und der Z-Achse relativ zu dem Schwenkarm verstellbar ist.

In Ausgestaltung der Erfindung ist vorgesehen, dass an dem Fahrzeugteil, das bei der Verstellbewegung von der Verstauposition in die Abdeckposition von dem Abdeckteil angelaufen wird, und/oder an dem Abdeckteil selbst, mindestens ein, vorzugsweise drei, Zentrierungsmittel, insbesondere mit Anlaufschrägen, vorgesehen sind. Über die Zentrierungsmittel mit Anlaufschrägen ist eine Feinverstellung des Abdeckteils relativ zu dem Schwenkarm möglich. Die Zentrierungsmittel sorgen für eine immer exakte Positionierung des Abdeckteils. Bevorzugt sind die drei Zentrierungsmittel in einem Umfangswinkel von zumindest näherungsweise 120° zueinander angeordnet. Die Zentrierungsmittel mit Anlaufschrägen dienen in erster Linie zur Verstellung des Abdeckteils in der gedachten, vom Abdeckteil bzw. der mittleren Flächenausdehnung des Abdeckteils aufgespannten Ebene. Darüber hinaus wird das Abdeckteil über die Anlaufschrägen senkrecht zu dieser Ebene verstellt. Zusätzlich können Anschläge zur Verstellung des Abdeckteils senkrecht zu der gedachten Ebene, bevorzugt in positiver Z-Richtung, an der Unterseite des Abdeckteils vorgesehen werden.

Besonders vorteilhaft ist es, wenn die Verstellbarkeit des Abdeckteils relativ zu dem Schwenkarm in mindestens eine Richtung entgegen der Kraft einer Feder erfolgt. Hierdurch kann das Abdeckteil in seiner Abdeckposition verspannt werden. Wenn das Abdeckteil im Wesentlichen aus einer vertikalen Richtung in seine Abdeckposition verstellt wird, ist es von Vorteil, die Verstellbarkeit des Abdeckteils in positiver Z-Richtung vom Schwenkarm weg entgegen einer Federkraft auszuführen. Hierdurch wird das Abdeckteil von der Feder in Richtung Schwenkarm und damit zur Fahrzeugkarosserie hin kraftbeaufschlagt und somit fest in seiner Abdeckposition gehalten. Die Feder bewirkt über die Anlaufschrägen gleichzeitig eine Verstellung des Abdeckteils in der gedachten, von dem Abdeckteil aufgespannten Ebene.

Eine Möglichkeit zur Realisierung der schwimmenden Lagerung des Abdeckteils an dem Schwenkarm besteht darin, an dem Abdeckteil mindestens einen Bolzen vorzusehen, der mit Radialspiel axial verschieblich durch eine Aufnahmeöffnung in dem Schwenkarm geführt ist. Es muss sichergestellt sein, dass das Abdeckteil mit Bolzen unverlierbar am Schwenkarm gehalten ist. Die Z-Achse verläuft bei einer derartigen Ausbildung der schwimmenden Lagerung parallel zur Längsachse des Bolzens. Die X-Achse und die Y-Achse verlaufen in radialer Richtung. Durch den Freigang des Bolzens innerhalb der Aufnahmeöffnung entlang sämtlicher Raumachsen ist das Abdeckteil frei und relativ zu dem Schwenkarm verstellbar gelagert.

Damit der Bolzen nicht mit seinem dem Abdeckteil abgewandten Ende aus der Aufnahmeöffnung heraus gleiten kann, ist eine Verliersicherung, insbesondere in der Form eines Bolzenkopfes, vorgesehen. Dabei weist der Bolzenkopf einen größeren Durchmesser als die Aufnahmeöffnung auf. Um die Bewegung des Abdeckteils in positiver Z-Richtung vom Schwenkarm weg federkraftbelastet auszuführen, ist in vorteilhafter Weise vorgesehen, zwischen dem Bolzenkopf und dem Schwenkarm, also auf der dem Abdeckteil abgewandten Seite des Schwenkarms, eine Feder, insbesondere eine Schraubenfeder anzuordnen, die sich einerseits am Bolzenkopf und andererseits am Schwenkarm abstützt. Hierdurch wird der Bolzenkopf vom Schwenkarm in negativer Z-Richtung weggedrückt, wodurch das Abdeckteil wiederum in Richtung Schwenkarm federkraftbelastet ist. Soll nun das Abdeckteil in positiver Z-Richtung vom Schwenkarm weg bewegt werden, muss die Federkraft überwunden werden. Wie bereits ausgeführt, wird das Abdeckteil über die Federkraft in seiner Abdeckposition sicher gehalten. Zusätzlich erfolgt über die in Z-Richtung wirkende Federkraft zusammen mit mindestens einem Zentrierungsmittel mit Anlaufschräge eine Verstellung des Abdeckteils in der gedachten, von dem Abdeckteil aufgespannten Ebene.

In Weiterbildung der Erfindung ist vorgesehen, dass die Abdeckanordnung mindestens ein sich im Wesentlichen in Fahrzeugquerrichtung erstreckendes Mittelteil umfasst, und dass die Abdeckteile in Abdeckposition seitlich des Mittelteils und flächenbündig zu diesem angeordnet sind. Das Mittelteil dient in der Regel als Hutablage.

In einer bevorzugten Ausführungsform sind die Abdeckteile in der Verstauposition unterhalb des Mittelteils angeordnet. Die Verschwenkung in die Verstauposition erfolgt mittels der Schwenkarme.

In Ausgestaltung der Erfindung ist vorgesehen, dass die Schwenkarme verschwenkbar an dem Mittelteil gelagert sind. Hierdurch ist es möglich, die Verstellarme mit den daran schwimmend angelenkten Abdeckteilen zusammen mit dem Mittelteil zu verschwenken. Bevorzugt ist das Mittelteil selbst verschwenkbar angeordnet, um ausreichend Raum für die Verstellbewegung des Fahrzeugdaches zwischen Ablage- und Schließposition bereitzustellen. Bevorzugt ist das Mittelteil um eine in Fahrzeugquerrichtung verlaufende Schwenkachse verschwenkbar gelagert. Zur Verschwenkung des Mittelteils ist bevorzugt eine Mehrgelenkkinematik, insbesondere eine Viergelenkkinematik vorgesehen. Das Mittelteil kann also von einer im wesentlichen horizontalen Abdeckposition in eine im wesentlichen vertikale, oder auch schräge Zwischenposition verschwenkt werden. Werden die Abdeckteile mit ihren Schwenkarmen in dieser Zwischenposition von ihrer Verstauposition in eine seitliche Position zu dem Mittelteil verfahren, so werden die Abdeckteile durch zurückverschwenken des Mittelteils in seine horizontale Abdeckposition selbst in ihre Abdeckposition von oben her überführt. Dabei laufen die Abdeckteile an Fahrzeugbauteilen auf, wodurch sich die Abdeckteile selbsttätig zentrieren.

In Weiterbildung der Erfindung ist vorgesehen, dass jedem Schwenkarm ein Elektromotor mit Getriebe zugeordnet ist. Mithilfe des Elektromotors kann der Schwenkarm und damit das Abdeckteil zwischen der Stauposition und der Abdeckposition verschwenkt werden. Dabei ist erfindungsgemäß vorgesehen, dass der Elektromotor eine Getriebeschnecke antreibt, welche mit einem fest mit dem Schwenkarm verbundenen Schneckenrad kämmend angeordnet ist. Durch Verdrehen der Getriebeschnecke wird der Schwenkarm um die Achse des Schneckenrads gedreht.

Weitere Vorteile und zweckmäßige Ausführungen sind den weiteren Ansprüchen, der Figurenbeschreibung und den Zeichnungen zu entnehmen. Es zeigen:
- Fig. 1: eine dreidimensionale, schematische Draufsicht von schräg oben eines Teils eines Fahrzeugs mit öffnungsfähigem Fahrzeugdach sowie mit einer dreiteiligen Abdeckanordnung für einen Verstauraum für das Fahrzeugdach,
- Fig. 2: eine Schnittdarstellung eines schwimmend an einem schwenkbar gelagerten Abdeckteils in Abdeckposition und
- Fig. 3: eine Teilansicht von unten auf ein als Hutablage ausgebildetes Mittelteil mit einem über einen Schwenkarm schwenkbar an diesem gelagerten Abdeckteil.

In den Figuren sind gleiche Bauteile und Bauteile mit gleicher Funktion mit den gleichen Bezugszeichen gekennzeichnet.

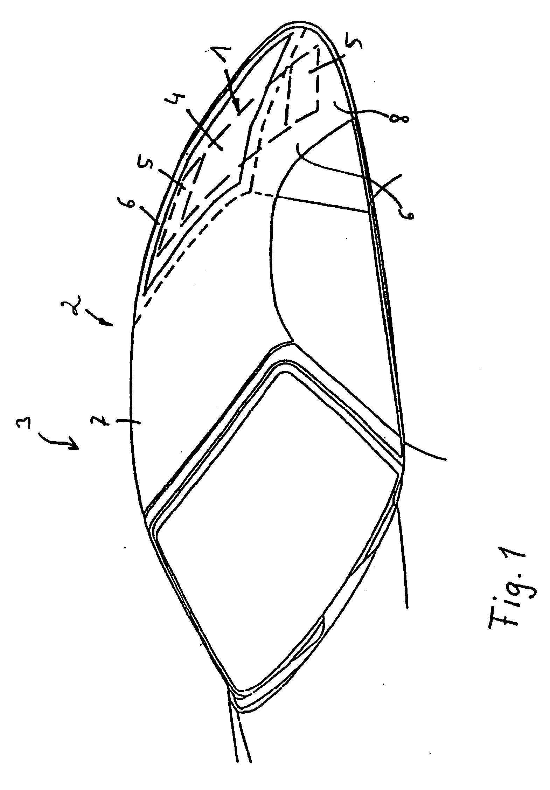

Fig. 1 zeigt eine Abdeckanordnung 1 für ein verstellbares Fahrzeugdach 2, ein Hardtop oder ein Softtop, eines teilweise dargestellten Fahrzeugs 3. Die Abdeckanordnung 1 weist ein Mittelteil 4 und zwei in Abdeckposition flächig daran angrenzende, seitliche Abdeckteile 5 auf. In Fig. 1 ist das Fahrzeugdach 2 geschlossen dargestellt. Das Mittelteil 4 dient in diesem Fall als Hutablage. Die seitlich von dem Mittelteil 4 dargestellten Abdeckteile 5 befinden sich normalerweise in dieser geschlossenen Dachposition in einer Verstauposition, beispielsweise unterhalb des Mittelteils 4.

Das verstellbare Fahrzeugdach 3 des Fahrzeugs 3 weist absenkbare C-Säulen 6 auf, die gemeinsam mit den Dachteilen 7, 8 in eine Verstauposition innerhalb eines teilweise unterhalb der Abdeckanordnung angeordneten Verstauraum verstaut werden. Durch die Absenkung der C-Säulen 13 geben diese einen Bauraum frei, der mittels der Abdeckteile 5 der Abdeckanordnung 1 abgedeckt werden kann.

Da die Abdeckteile 5 symmetrisch zu dem Mittelteil 4 ausgebildet sind, beschränkt sich im Folgenden die Beschreibung auf das in Fahrzeugrichtung links angeordnete Abdeckteil 5.

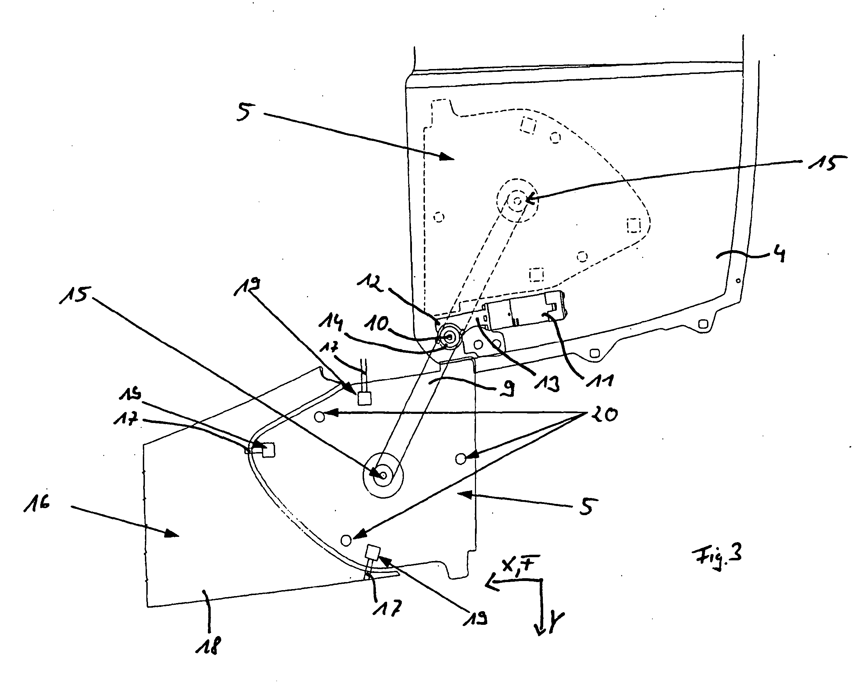

Wie sich aus Fig. 3 ergibt, ist das flächige Abdeckteil 5 über einen Schwenkarm 9 verschwenkbar an dem nur teilweise dargestellten Mittelteil 4 angelenkt. Die Schwenkachse 10 verläuft im Wesentlichen senkrecht zur Flächenerstreckung des Mittelteils 4. In Fig. 3 ist das Abdeckteil 5 in der unteren Zeichnungshälfte in Abdeckposition dargestellt. In der oberen Zeichnungshälfte ist das Abdeckteil 5 in seiner Verstauposition unterhalb des Mittelteils 4 strichliert dargestellt. Zwischen den beiden Positionen kann das Abdeckteil 5 mittels des Schwenkarms verstellt werden. Der Schwenkarm 5 wird über einen Elektromotor 11 angetrieben. Zwischen dem Elektromotor 11 und dem Schwenkarm 10 ist ein Getriebe 12, bestehend aus einer Getriebeschnecke 13 und einem fest mit dem Schwenkarm 9 verbundenen Schneckenrad 14, angeordnet. Die von dem Elektromotor 11 angetriebene Getriebeschnecke 13 dreht das Schneckenrad 14, wodurch das an dem Schwenkarm 9 gelagerte Abdeckteil 5 zwischen den in Fig. 3 angedeuteten Positionen verstellbar ist.

Das Abdeckteil 5 ist schwimmend über ein Lager 15 an dem Schwenkarm 9 gelagert. Das Lager 15 ermöglicht eine Relativbewegung des Abdeckteils zum Schwenkarm 9 entlang aller drei Raumachsen. In Fig. 3 sind die in der von dem Abdeckteil 5 aufgespannten Ebene angeordneten Achsen x und y eingezeichnet. Dabei weist die X-Achse im wesentlichen in Fahrtrichtung F. Die Y-Achse weist in Fahrzeugquerrichtung. Senkrecht zu der X-Achse und der Y-Achse erstreckt sich die nicht dargestellte Z-Achse in die Zeichnungsebene gemäß Fig. 3 hinein. Die Z-Achse verläuft im Wesentlichen parallel zu der Schwenkachse 10 des Schwenkarms 9.

In der in der unteren Zeichnungshälfte gemäß Fig. 3 dargestellten Abdeckposition stützt sich das Abdeckteil 5 an der Fahrzeugkarosserie 16 ab. Genauer ausgedrückt, liegt das Abdeckteil 5 auf einer angedeuteten Brüstung 17 der Außenhaut 18 auf. Die Brüstung 17 ist gegenüber der Außenhaut 18 in Richtung Fahrzeuginnerem zurückversetzt, um eine bündige Anlage der Abdeckteiloberseite an der Fahrzeugaußenhaut 18 zu gewährleisten.

Damit das Abdeckteil 5 seine exakte Abdeckposition einnehmen kann, sind mehrere Zentrierungsmittel 19 mit Anlaufschrägen an der Unterseite des Abdeckteils 5 angeordnet. Mit den Zentrierungsmittel bzw. mit den Anlaufschrägen läuft das Abdeckteil 5 bei seiner Verstellung in die Abdeckposition auf der Brüstung 17 auf und wird im Zusammenspiel von Zentrierungsmittel und Brüstung in seiner Abdeckposition zentriert. Dabei gibt es verschiedene Möglichkeiten, wie das Abdeckteil 5 in seine Abdeckposition verschwenkt werden kann. Zum einen ist es denkbar, das Abdeckteil 5 mittels des Schwenkarms 9 seitlich in seine Abdeckposition hineinzuverschwenken. Ebenso ist es denkbar, dass das Abdeckteil 5 von oben, also in negative Z-Richtung, in die Abdeckposition eingeführt wird. Dies kann durch eine Verschwenkbewegung des Mittelteils 4 um eine in Fahrzeugquerrichtung verlaufende Schwenkachse. Das Abdeckteil 5 wird bei im Wesentlichen vertikal oder schräg stehendem Mittelteil 4 von seiner Verstauposition mittels des Schwenkarms 9 nach außen, also neben das Mittelteil 4 verschwenkt. Danach wird das Mittelteil 4 in seine in Fig. 3 dargestellte, im Wesentlichen horizontale Lage verschwenkt, wodurch das Abdeckteil 5 von oben in seine Abdeckposition gelangt. Zur Verstellung des Abdeckteils 5 entlang der Z-Achse und relativ zu dem Schwenkarm 9 sind an der Unterseite des Abdeckteils 5 mehrere Anschläge 20 vorgesehen, die auf Fahrzeugbauteile auflaufen.

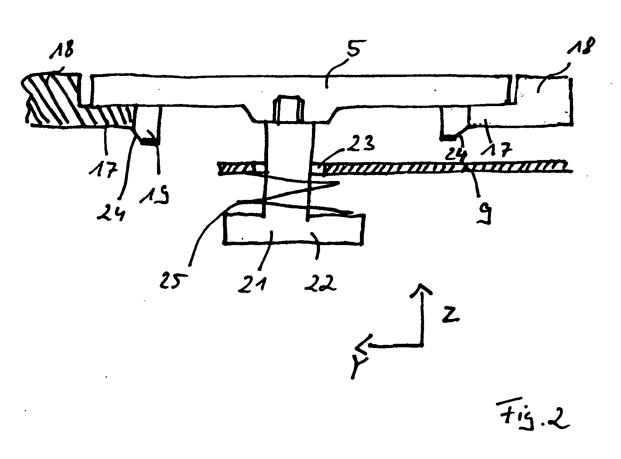

In Fig. 2 ist eine Schnittdarstellung durch ein Abdeckteil 5 dargestellt. In dem gezeigten Ausführungsbeispiel liegt die Y-Achse und die nicht dargestellte X-Achse wieder in der von dem Abdeckteil 5 bzw. von der mittleren Flächenausdehnung des Abdeckteils 5 aufgespannten, gedachten Ebene. Die Z-Achse verläuft senkrecht dazu, in Ablageposition in im Wesentlichen vertikaler Richtung. An die Unterseite des Abdeckteils 5 ist ein Bolzen 21 mit Bolzenkopf 22 angeschraubt. Der Bolzen 21 ist durch eine Aufnahmeöffnung 23 innerhalb des Schwenkarms 9 mit Radialspiel, also hier in X- und Y-Richtung, geführt. Der sich hierdurch ergebende Freigang beträgt etwa +/- 5 mm entlang der X-Achse und der Y-Achse. Neben der radialen Verschieblichkeit ist der Bolzen 21 auch axial innerhalb der Aufnahmeöffnung 23 verschieblich. Hierdurch ergibt sich eine Verstellbarkeit des Bolzens 21 und damit des Abdeckteils 5 entlang aller drei Raumachsen x, y, z relativ zu dem Schwenkarm 9.

In der in Fig. 2 dargestellten Abdeckposition befindet sich das Abdeckteil 5 seitlich des in Fig. 2 nicht dargestellten Mittelteils. Das Abdeckteil 5 liegt mit seiner Unterseite auf einer Brüstung 17 der Fahrzeugkarosserieaußenhaut 18 auf. Die Zentrierung des Abdeckteils 5 innerhalb der abzudeckenden Öffnung erfolgt über die Zentrierungsmittel 19 mit ihren in Richtung Brüstung 17 ansteigenden Anlaufschrägen 24.

Zwischen dem Bolzenkopf 22 und dem Schwenkarm 9 ist ein Schraubenfeder 25 angeordnet, die sich einerseits an dem Bolzenkopf 22 und andererseits an dem Schwenkarm 9 abstützt. Die Schraubenfeder 25 zieht das Abdeckteil 5 in Richtung Schwenkarm 9 und damit in Richtung Brüstung 17, wodurch das Abdeckteil 5 in seiner Abdeckposition stabilisiert wird. Wird beispielsweise das Abdeckteil 5 zusammen mit dem Schwenkarm 9 von oben in die Abdeckposition hereingeschwenkt und laufen die Zentrierungsmittel 19 mit ihren Anlaufschrägen 24 auf die Brüstung 17 auf, so wird das Abdeckteil 5 mittels der Feder 25 in die dargestellte Abdeckposition gezogen und verspannt. Dabei vollführt das Abdeckteil 5 eine relative Bewegung zu dem Schwenkarm 9 möglich. Durch die Erfindung ist es möglich, auf eine exakte Justage des Abdeckteils an dem Schwenkarm 9 bzw. des Schwenkarms 9 an dem Mittelteil 4 oder einem sonstigen Anlenkpunkt bei der Montage zu verzichten. Die Zentrierung erfolgt automatisch über die erfindungsgemäße Anordnung.

Neben dem seitlichen Einschwenken des Abdeckteils 5 in seine Abdeckposition und/oder dem Einschwenken des Abdeckteils 5 in negativer Z-Richtung in seine Abdeckposition ist es auch denkbar, dass die Bewegung von unten her erfolgt. Mit Vorteil ist die Feder 25 dann derart angeordnet, dass das Abdeckteil 5 von dem Schwenkarm 9 weg in Richtung Fahrzeugkarosserie gedrückt wird.

## Patentansprüche

1. Fahrzeug mit einem in einen Verstauraum versenkbaren Fahrzeugdach (2) und mit einer Abdeckanordnung (1) für den Verstauraum, mit zwei jeweils an einem Schwenkarm (9) gehaltenen Abdeckteilen (5), wobei die Abdeckteile (5) mittels ihrer Schwenkarme (9) zwischen einer Abdeckposition und einer Verstauposition verstellbar sind und mindestens ein Abdeckteil (5) schwimmend an seinem zugehörigen Schwenkarm (9) gelagert ist und entlang dreier, jeweils im 90° Winkel zueinander angeordneter Achsen (X, Y, Z) relativ zu dem Schwenkarm (9) frei verstellbar ist, wobei sich das Abdeckteil (5) in Abdeckposition an einem Fahrzeugteil (16, 17, 18) abstützt,
**dadurch gekennzeichnet,**
**dass** an dem Abdeckteil (5) mindestens ein Bolzen (21) vorgesehen ist, der mit Radialspiel axial verschieblich durch eine Aufnahmeöffnung (23) in dem Schwenkarm (9) geführt und an dem Schwenkarm (9) unverlierbar gehalten ist, dass der Bolzen (21) auf der dem Abdeckteil (5) abgewandten Seite eine Verliersicherung (21) aufweist und dass zwischen der Verliersicherung (21) und dem Schwenkarm (9) eine Feder (25) angeordnet ist, die sich einerseits an der Verliersicherung (21) und andererseits am Schwenkarm (9) abstützt.

2. Fahrzeug nach Anspruch 1,
**dadurch gekennzeichnet, dass** die X-Achse und die Y-Achse in der gedachten Ebene der mittleren Flächenausdehnung des Abdeckteils liegen, und dass die Z-Achse senkrecht zu dieser Ebene angeordnet ist, und dass das Abdeckteil (5) gleichzeitig in dieser Ebene sowie entlang der Z-Achse verstellbar ist.

3. Fahrzeug nach einem der Ansprüche 1 oder 2,
**dadurch gekennzeichnet,**
**dass** an dem Fahrzeugteil (16, 17, 18), insbesondere an der Fahrzeugkarosserie (16, 17, 18), und/oder an dem Abdeckteil (5) Zentriermittel (19), vorzugsweise mit Anlaufschräge (24), zur Zentrierung des Abdeckteils (5) in seine Abdeckposition vorgesehen sind.

4. Fahrzeug nach einem der Ansprüche 2 oder 3,
**dadurch gekennzeichnet,**
**dass** das Abdeckteil (5) relativ zu dem Schwenkarm (9) in mindestens eine Richtung, vorzugsweise in positiver Z-Richtung vom Schwenkarm (9) weg, entgegen der Kraft einer Feder (25) verstellbar ist.

5. Fahrzeug nach einem der Ansprüche 1 bis 4,
**dadurch gekennzeichnet,**
**dass** die Verliersicherung (21) als Bolzenkopf (21) ausgeführt ist.

6. Fahrzeug nach einem der Ansprüche 1 bis 5,
**dadurch gekennzeichnet,**
**dass** sich das Abdeckteil (5) in Abdeckposition an der Fahrzeugkarosserie (16, 17, 18), abstützt.

7. Fahrzeug nach einem der vorhergehenden Ansprüche,
**dadurch gekennzeichnet,**
**dass** die Abdeckanordnung (1) mindestens ein Mittelteil (4) umfasst, und dass die Abdeckteile (5) in Abdeckposition seitlich des Mittelteils (4) angeordnet sind und zusammen mit dem Mittelteil (4) eine flächige Abdeckung bilden.

8. Fahrzeug nach Anspruch 7,
**dadurch gekennzeichnet,**
**dass** die Abdeckteile (5) in der Verstauposition unterhalb des Mittelteils (4) angeordnet sind.

9. Fahrzeug nach Anspruch 8,
**dadurch gekennzeichnet,**
**dass** der Schwenkarm (9), vorzugsweise um eine senkrecht zum Mittelteil (4) verlaufende Schwenkachse (10), verschwenkbar an dem Mittelteil (4) gelagert ist.

10. Fahrzeug nach einem der vorhergehenden Ansprüche,
**dadurch gekennzeichnet,**
**dass** das Mitteilteil (4), vorzugsweise um eine in Fahrzeugquerrichtung verlaufende Schwenkachse, insbesondere mittels einer Viergelenkkinematik, verschwenkbar ist.

11. Fahrzeug nach einem der vorhergehenden Ansprüche,
**dadurch gekennzeichnet,**
**dass** zum Verschwenken des Schwenkarms (9) ein Elektromotor (11) mit Getriebe (12) vorgesehen ist, und dass das Getriebe (12) von einem drehfest mit dem Schwenkarm (9) verbundenen Scheckenrad (14) und einer vom Elektromotor (11) angetriebenen Getriebeschnecke (13) gebildet ist.

12. Fahrzeug nach einem der vorhergehenden Ansprüche,
**dadurch gekennzeichnet,**
**dass** zwischen der Verliersicherung (21) und dem Schwenkarm (9) eine Schraubenfeder (25) angeordnet ist.

## Claims

1. Vehicle having a vehicle roof (2) which can be lowered into a stowage space and having a cover arrangement (1) for the stowage space, having two cover parts (5) held in each case on a pivot arm (9), with the cover parts (5) being adjustable by means of their pivot arms (9) between a covering position and a stowing position, and with at least one cover part (5) being mounted on its associated pivot arm (9) in a floating fashion and being freely adjustable relative to the pivot arm (9) along three axes (X, Y, Z) which are arranged in each case at a 90° angle to one another, with the cover part (5) being supported, in the covering position, on a vehicle part (16, 17, 18),
**characterized**
**in that** at least one bolt (21) is provided on the cover part (5), which bolt (21) is guided in an axially movable manner with radial play through a receiving opening (23) of the pivot arm (9) and is captively held on the pivot arm (9), in that the bolt (21) has a captive retention device (21) on the side facing away from the cover part (5), and in that a spring (25) is arranged between the captive retention device (21) and the pivot arm (9), which spring (25) is supported at one side on the captive retention device (21) and at the other side on the pivot arm (9).

2. Vehicle according to Claim 1,
**characterized**
**in that** the X axis and the Y axis lie in the imaginary plane of the mean areal extent of the cover part, and in that the Z axis is arranged perpendicular to said plane, and in that the cover part (5) is simultaneously adjustable in said plane and along the Z axis.

3. Vehicle according to one of Claims 1 or 2,
**characterized**
**in that** centring means (19), preferably with a run-on bevel (24), for centring the cover part (5) in its covering position are provided on the vehicle part (16, 17, 18), in particular on the vehicle body (16, 17, 18) and/or on the cover part (5).

4. Vehicle according to one of Claims 2 or 3,
**characterized**
**in that** the cover part (5) is adjustable relative to the pivot arm (9) in at least one direction, preferably in the positive Z direction away from the pivot arm (9), counter to the force of a spring (25).

5. Vehicle according to one of Claims 1 to 4,
**characterized**
**in that** the captive retention device (21) is designed as a bolt head (21).

6. Vehicle according to one of Claims 1 to 5,
**characterized**
**in that** the cover part (5) is supported, in the covering position, on the vehicle body (16, 17, 18).

7. Vehicle according to one of the preceding claims,
**characterized**
**in that** the cover arrangement (1) comprises at least one central part (4) and in that the cover parts (5), in the covering position, are arranged laterally with respect to the central part (4) and, together with the central part (4), form an areal covering.

8. Vehicle according to Claim 7,
**characterized**
**in that** the cover parts (5), in the stowing position, are arranged below the central part (4).

9. Vehicle according to Claim 8,
**characterized**
**in that** the pivot arm (9) is pivotably mounted, preferably so as to be pivotable about a pivot axis (10) running perpendicular to the central part (4), on the central part (4).

10. Vehicle according to one of the preceding claims,
**characterized**
**in that** the central part (4) can be pivoted, preferably about a pivot axis running in the vehicle transverse direction, in particular by means of a four-bar linkage.

11. Vehicle according to one of the preceding claims,
**characterized**
**in that,** to pivot the pivot arm (9), an electric motor (11) with a gearing (12) is provided, and in that the gearing (12) is formed from a worm wheel (14) rotationally fixedly connected to the pivot arm (9) and from a gear worm (13) driven by the electric motor (11) .

12. Vehicle according to one of the preceding claims,
**characterized**
**in that** a helical spring (25) is arranged between the captive retention device (21) and the pivot arm (9).

## Revendications

1. Véhicule comprenant un toit de véhicule (2) pouvant être renfoncé dans un espace de rangement et comprenant un agencement de recouvrement (1) pour l'espace de rangement, avec deux parties de recouvrement (5) maintenues à chaque fois sur un bras pivotant (9), les parties de recouvrement (5) pouvant être déplacées au moyen de leurs bras pivotants (9) entre une position de recouvrement et une position de rangement, et au moins une partie de recouvrement (5) étant montée de manière flottante sur son bras pivotant (9) associé, et pouvant être déplacée librement le long de trois axes (X, Y, Z) orientés à chaque fois suivant un angle de 90° les uns par rapport aux autres, par rapport au bras pivotant (9), la partie de recouvrement (5) s'appuyant, dans la position de recouvrement, contre une partie du véhicule (16, 17, 18),
**caractérisé en ce que**
l'on prévoit sur la partie de recouvrement (5) au moins un boulon (21) qui est guidé avec un jeu radial de manière déplaçable axialement à travers une ouverture de réception (23) dans le bras pivotant (9), et qui est maintenu de manière imperdable sur le bras pivotant (9), **en ce que** le boulon (21) présente, du côté opposé à la partie de recouvrement (5), une fixation antiperte (21) et **en ce qu'**entre la fixation antiperte (21) et le bras pivotant (9) est disposé un ressort (25), qui s'appuie d'une part contre la fixation antiperte (21) et d'autre part contre le bras pivotant (9).

2. Véhicule selon la revendication 1,
**caractérisé en ce que**
l'axe X et l'axe Y se situent dans le plan imaginaire de l'extension de la surface centrale de la partie de recouvrement, et **en ce que** l'axe Z est disposé perpendiculairement à ce plan, et **en ce que** la partie de recouvrement (5) peut être déplacée simultanément dans ce plan ainsi que le long de l'axe Z.

3. Véhicule selon l'une quelconque des revendications 1 ou 2,
**caractérisé en ce que**
des moyens de centrage (19), de préférence avec un biseau de montée (24), sont prévus sur la partie du véhicule (16, 17, 18), notamment sur la carrosserie du véhicule (16, 17, 18), et/ou sur la partie de recouvrement (5), pour le centrage de la partie de recouvrement (5) dans sa position de recouvrement.

4. Véhicule selon l'une quelconque des revendications 2 ou 3,
**caractérisé en ce que**
la partie de recouvrement (5) peut être déplacée par rapport au bras pivotant (9) dans au moins une direction, de préférence dans la direction Z positive, à l'écart du bras pivotant (9), à l'encontre de la force d'un ressort (25).

5. Véhicule selon l'une quelconque des revendications 1 à 4,
**caractérisé en ce que**
la fixation antiperte (21) est réalisée sous forme de tête de boulon (21).

6. Véhicule selon l'une quelconque des revendications 1 à 5,
**caractérisé en ce que**
la partie de recouvrement (5) s'appuie dans la position de recouvrement sur la carrosserie du véhicule (16, 17, 18).

7. Véhicule selon l'une quelconque des revendications précédentes,
**caractérisé en ce que**
l'agencement de recouvrement (1) comprend au moins une partie centrale (4) et **en ce que** les parties de recouvrement (5) sont disposées, dans la position de recouvrement, latéralement à la partie centrale (4) et forment un recouvrement plat, conjointement avec la partie centrale (4).

8. Véhicule selon la revendication 7,
**caractérisé en ce que**
les parties de recouvrement (5) sont disposées dans la position de rangement en dessous de la partie centrale (4).

9. Véhicule selon la revendication 8,
**caractérisé en ce que**
le bras pivotant (9) est monté sur la partie centrale (4) de manière à pouvoir pivoter de préférence autour d'un axe de pivotement (10) s'étendant perpendiculairement à la partie centrale (4).

10. Véhicule selon l'une quelconque des revendications précédentes,
**caractérisé en ce que**
la partie centrale (4), peut pivoter de préférence autour d'un axe de pivotement s'étendant dans la direction transversale du véhicule, notamment au moyen d'une cinématique à quadrilatère articulé.

11. Véhicule selon l'une quelconque des revendications précédentes, **caractérisé en ce que**
pour faire pivoter le bras pivotant (9), on prévoit un moteur électrique (11) avec une transmission (12) et **en ce que** la transmission (12) est formée par une roue à denture hélicoïdale (14) connectée de manière solidaire en rotation au bras pivotant (9) et par une vis sans fin de transmission (13) entraînée par le moteur électrique (11).

12. Véhicule selon l'une quelconque des revendications précédentes,
**caractérisé en ce que** l'on dispose entre la fixation antiperte (21) et le bras pivotant (9) un ressort à boudin (25).
